# EUROPEAN PATENT APPLICATION

(11) **EP 4 679 834 A1**
(43) Date of publication of application: **14.01.2026**
(21) Application number: 24766370.1
(22) Date of filing: 01.03.2024
(51) Int. Cl.: H04N 21/2187, H04N 21/4788, H04N 21/431

(54) **SCREEN MIRRORING METHOD AND APPARATUS, DEVICE, AND STORAGE MEDIUM**

(30) Priority: 03.03.2023 CN 202310217923
(71) Applicant: Beijing Zitiao Network Technology Co., Ltd., Beijing 100190 (CN)
(72) Inventor: DENG, Jinghui, Beijing 100028 (CN); HUANG, Jiahuan, Beijing 100028 (CN); ZHAO, Buding, Beijing 100028 (CN)
(74) Representative: Marks & Clerk LLP
(86) International application number: PCT/CN2024/079662
(87) International publication number: WO 2024/183654

(57) **Abstract**

Embodiments of the present disclosure provide a screen casting method and apparatus, a device, and a storage medium. The screen casting method includes: displaying target content based on an operation triggered by a first user on a live streaming interface; obtaining a video stream corresponding to the target content; and casting the video stream to a first user seat for display, and pushing the video stream to a client of a second user.

## Description

### CROSS-REFERENCE TO RELATED APPLICATION(S)

This application claims priority to Chinese Patent Application No. 202310217923.1, entitled "SCREEN CASTING METHOD AND APPARATUS, DEVICE, AND STORAGE MEDIUM", filed with the China National Intellectual Property Administration on March 03, 2023, the disclosure of which is incorporated by reference in its entirety.

### FIELD

Embodiments of the present disclosure relate to the technical field of live video streaming, and for example, to a screen casting method and apparatus, a device, and a storage medium.

### BACKGROUND

In the related technology, in a video chat room, a seat can only display an image captured by a camera of a client participating in video/voice chat, and cannot display other images. If a connected user opens other content in a live streaming room, such as opening a text document, a mini program, and the like, other users in the live streaming room cannot watch the content opened by the connected user, and are unaware of the content in the live streaming room. This affects a live streaming effect.

### SUMMARY

Embodiments of the present disclosure provide a screen casting method and apparatus, a device, and a storage medium. Target content triggered by a user in a live streaming room is displayed at a user seat, so that other users in the live streaming room can directly watch the content triggered by the user, which improves the diversity of interactions between users in a live streaming process and enhances a user experience.

In a first aspect, an embodiment of the present disclosure provides a screen casting method, including:
displaying target content based on an operation triggered by a first user on a live streaming interface;
obtaining a video stream corresponding to the target content; and
casting the video stream to a first user seat for display, and pushing the video stream to a client of a second user.

In a second aspect, an embodiment of the present disclosure further provides a screen casting method, including:
receiving a video stream pushed by a client of a first user, wherein the video stream includes a video stream corresponding to target content; and
rendering the video stream corresponding to the target content to a first user seat for display.

In a third aspect, an embodiment of the present disclosure further provides a screen casting apparatus, including:
a target content displaying module, configured to display target content based on an operation triggered by a first user on a live streaming interface;
a video stream obtaining module, configured to obtain a video stream corresponding to the target content; and
a screen casting module, configured to cast the video stream to a first user seat for display, and pushing the video stream to a client of a second user.

In a fourth aspect, an embodiment of the present disclosure further provides a screen casting apparatus, including:
a video stream receiving module, configured to receive a video stream pushed by a client of a first user, wherein the video stream includes a video stream corresponding to target content; and
a displaying module, configured to render the video stream corresponding to the target content to a first user seat for display.

In a fifth aspect, an embodiment of the present disclosure further provides an electronic device. The electronic device includes:
one or more processors; and
a storage, configured to store one or more programs,
wherein the one or more programs, when run by the one or more processors, cause the one or more processors to implement the screen casting method according to the embodiments of the present disclosure.

In a sixth aspect, an embodiment of the present disclosure further provides a storage medium including computer-executable instructions. When executed by a computer processor, the computer-executable instructions are used for performing the screen casting method according to the embodiments of the present disclosure.

### BRIEF DESCRIPTION OF THE DRAWINGS

The above and other features, advantages, and aspects of the various embodiments of the present disclosure will become more apparent by combining the accompanying drawings and referring to the following specific implementations. Throughout the accompanying drawings, identical or similar reference numerals represent identical or similar elements. It should be understood that the accompanying drawings are illustrative, and components and elements may not necessarily be drawn to scale.
FIG. 1 is a flowchart of a screen casting method according to an embodiment of the present disclosure;
FIG. 2 is a schematic diagram of an interface of a client of a first user according to an embodiment of the present disclosure;
FIG. 3 is a sample graph of displaying target content according to an embodiment of the present disclosure;
FIG. 4 is a schematic diagram of a screen casting method according to an embodiment of the present disclosure;
FIG. 5 is a sample graph of casting target content to a first user seat according to an embodiment of the present disclosure;
FIG. 6 is a flowchart of a screen casting method according to an embodiment of the present disclosure;
FIG. 7 is a schematic structural diagram of a screen casting apparatus according to an embodiment of the present disclosure;
FIG. 8 is a schematic structural diagram of a screen casting apparatus according to an embodiment of the present disclosure; and
FIG. 9 is a schematic structural diagram of an electronic device according to an embodiment of the present disclosure.

### DETAILED DESCRIPTION OF EMBODIMENTS

The embodiments of the present disclosure will be described in detail below with reference to the accompanying drawings. Although the accompanying drawings show some embodiments of the present disclosure, it should be understood that the present disclosure can be implemented in various forms, and should not be explained as being limited to the embodiments stated herein. Rather, these embodiments are provided for understanding the present disclosure more thoroughly and completely. It should be understood that the accompanying drawings and embodiments of the present disclosure are only used for illustration, but are not intended to limit the protection scope of the present disclosure.

It should be understood that respective steps recorded in method implementations of the present disclosure can be executed in different orders and/or in parallel. In addition, the method implementations may include additional steps and/or omit the execution of the steps shown. The scope of the present disclosure is not limited in this aspect.

The term "include" and its variants as used herein mean widespread inclusion, i.e., "including but not limited to". The term "based on" is "based at least in part on". The term "one embodiment" means "at least one embodiment". The term "another embodiment" means "at least another embodiment". The term "some embodiments" means "at least some embodiments". Relevant definitions of other terms will be given in the description below.

It should be noted that the concepts such as "first" and "second" mentioned in the present disclosure are only used to distinguish different apparatuses, modules, or units, and are not intended to limit the order or interdependence of the functions performed by these apparatuses, modules, or units.

It should be noted that the modifications of "one" and "plurality" mentioned in the present disclosure are indicative rather than restrictive, and those skilled in the art should understand that unless otherwise explicitly stated in the context, they should be understood as "one or more".

Names of messages or information interacted between a plurality of apparatuses in the implementations of the present disclosure are only for illustrative purposes and are not intended to limit the scopes of these messages or information.

It can be understood that before use of the technical solutions disclosed in various embodiments of the present disclosure, users should be informed of the type, scope of use, usage scenarios, and the like of personal information involved in the present disclosure in accordance with relevant laws and regulations in an appropriate manner, so as to obtain authorization from the users.

For example, in response to that an active request of a user has been received, prompt information is sent to the user to clearly remind the user that personal information of the user needs to be involved in an operation requested to be executed. Thus, the user can independently select whether to provide the personal information to software or hardware such as an electronic device, an application program, a server, or a storage medium that performs the operation of the technical solutions of the present disclosure according to the prompt information.

As an optional but non-restrictive implementation, in response to that an active request of a user has been received, prompt information is sent to the user through, for example, a pop-up window where the prompt information can be presented in text. In addition, the pop-up window can also carry a selection control for the user to select whether to "agree" or "refuse" to provide the personal information to the electronic device.

It can be understood that the above notification and the above user authorization obtaining process are only illustrative and do not constitute a limitation on the implementations of the present disclosure. Other methods that meet the relevant laws and regulations can also be applied to the implementations of the present disclosure.

It can be understood that data involved in the technical solutions (including but not limited to the data itself, and obtaining or use of the data) should comply with the requirements of corresponding laws and regulations and relevant provisions.

At present, in a live video streaming chat room, a live streamer can chat with multiple guests through live streaming connection, and users in the live streaming chat room can watch content displayed on a live streamer seat and content displayed at a guest seat. In the related technology, the live streamer seat can only display an image acquired by a client of the live streamer. When a user performs another operation on a live streaming interface, such as opening a mini program, a game, or a text document, viewers cannot watch content opened by the live streamer, making the viewers unaware of the content in the live streaming room. Moreover, the content opened by the live streamer may occlude seats and a comment area, thereby affecting interactions between the live streamer and the viewers, and affecting operations performed by the live streamer on the live streaming room.

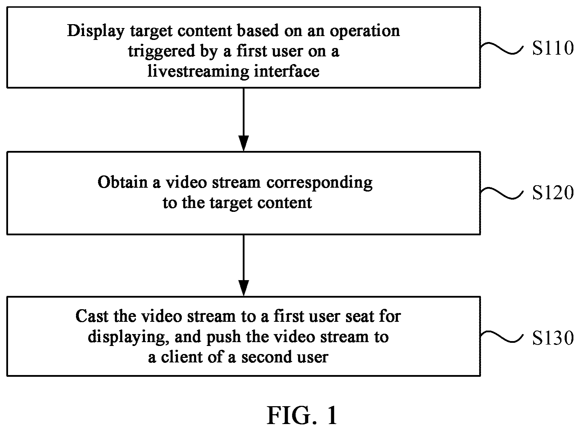

FIG. 1 is a flowchart of a screen casting method according to an embodiment of the present disclosure. This embodiment of the present disclosure is applicable to a situation of screen casting based on content triggered by a user in a live streaming room. The method may be performed by a screen casting apparatus arranged at a client of a first user. The apparatus may be implemented in the form of software and/or hardware. Optionally, the apparatus is implemented through an electronic device. The electronic device may be a mobile terminal, a PC end, a server, or the like.

As shown in FIG. 1, the method includes:
S110, target content is displayed based on an operation triggered by a first user on a live streaming interface,
wherein the first user may be a connected user, such as a live streamer or a guest connected to the live streamer. The target content may be any content that can be displayed and shared, such as a mini program, a game, a web page, and a document. The target content may be mounted in the form of a container in a live streaming application (APP) and displayed in a function panel of the live streaming interface.

An application scenario in this embodiment may be a live video streaming scenario or a voice live streaming scenario. In a live streaming process, the first user may perform video chat and/or voice chat with other users, for example: a video chat room, a voice chat room, or a singing scenario.

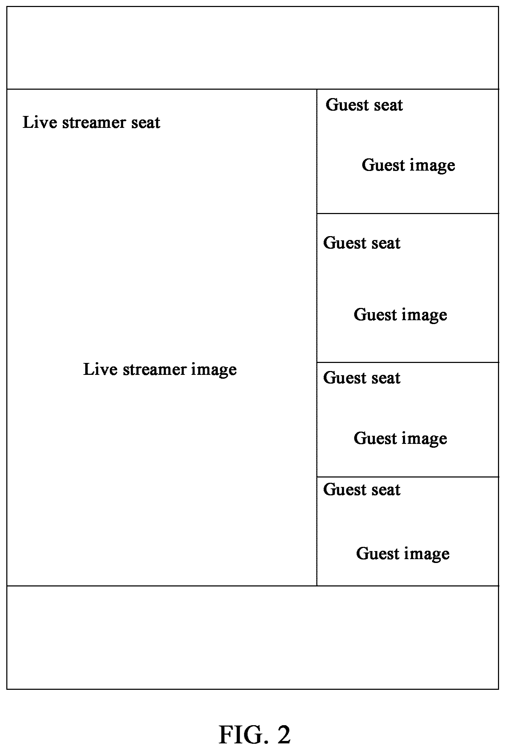

In this embodiment, during a video chat interaction between the first user and multiple other users in the live streaming room, a seat area in an interface of the first user includes a seat of a connected user. In a scenario of video chat, a terminal of the first user captures an image of the first user in real time and displays the captured image in a first user seat. If another connected user turns on a camera, an image captured by the camera is displayed in its seat. When the first user does not trigger the target content, the first user seat displays the image captured by the camera of the first user, for a video interaction between the first user and the another connected user. In a scenario of voice chat, the terminal of the first user and a terminal of the another connected user acquire respective voice information, and the first user seat and the another user seat display corresponding relevant information (such as profile photos). For example, FIG. 2 is a schematic diagram of an interface of a first user in this embodiment. As shown in FIG. 2, seats of users participating in video/voice chat are displayed on a live streaming interface. The first user being a live streamer is taken as an example. Images captured by respective cameras are respectively displayed in a live streamer seat and guest seats. When the live streamer intends to share triggered target content with another users (guests and viewers) in a live streaming room, the live streamer searches a function panel of a live streamer interface for the target content and triggers the searched target content.

A seat may be understood as a medium for a user in the live streaming room to participate in interactive live streaming. A user (connected user) in a seat may participate in interactive live streaming, and users (viewers) not in their seats can only watch the interactive live streaming. A seat includes attributes such as a status and a user. The status of the seat includes an empty status, an occupied status, and an off status. When a seat is in the occupied status, the user attribute is user information of a connected user in the current seat. In this embodiment, the live streaming interface displays the seats of the users participating in video/voice chat. As shown in FIG. 2 of the above embodiment, the live streaming interface displays the live streamer seat and the guest seats.

Specifically, the process of displaying the target content based on the operation triggered by the first user on the live streaming interface includes: requesting tag information of the target content from a server based on a first operation triggered by the first user on the live streaming interface; receiving the tag information sent by the server, and displaying the tag information on a panel corresponding to the target content; and displaying the target content based on a second operation triggered by the first user on the tag information.

The tag information may be understood as meta-information. In this embodiment, a list of identifications (e.g. names/covers) of a plurality of pieces of content or a search box for the target content is displayed on the function panel of the interface of the first user. The first operation triggered by the first user on the live streaming interface may be that the first user taps on an identification of the target content or types search information of the target content into the search box and taps on search When it is monitored that the first user triggers the first operation, a first request is generated, and the first request is sent to the server where the target content is located. The server returns the tag information of the target content to a client of the first user according to the first request and displays the tag information on the function panel. The tag information may include a function introduction of the target content, a start button for the target content, a sample graph of the target content, and the like. For example, assuming that the target content is a game, the tag content includes a function introduction of the game, a sample graph of the game during operation, a start button of the game, and the like.

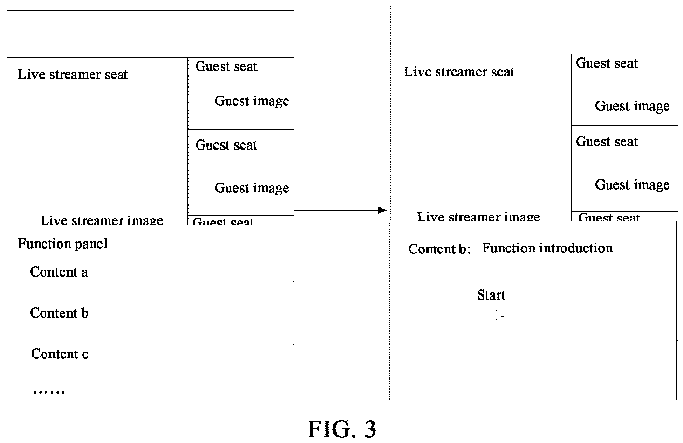

The first user triggers the second operation on the displayed tag information to trigger the target content, for example: entering a mini program, entering a game, opening a web page or a text document, or the like. For example, FIG. 3 is a sample graph of triggering target content in this embodiment. As shown in FIG. 3, a function panel displays identifications such as content a, content b, and content c. A first user being a live streamer is taken as an example. If the live streamer intends to trigger content b, content b is the target content. A user taps on the identification of content b, and tag information of content b is displayed on the function panel. The live streamer taps on a "start" button in the tag information to complete the operation of triggering the target content. As shown in FIG. 3, in the process of triggering the target content by the live streamer, the function panel occludes some of guest seats and a portion of an area of a live streamer seat. Therefore, to prevent the live streamer from continuing to occlude a seat area when operating the target content, the solution of this embodiment needs to be used to display the target content in the live streamer seat.

In this embodiment, the first user may trigger the target content on the live streaming interface, which can improve the convenience of displaying the target content.

S120, a video stream corresponding to the target content is obtained,
wherein the video stream corresponding to the target content may be a video stream formed in the process of operating the target content by the first user. For example, if the target content is a game, the video stream is a video generated in the process of operating the game by the first user. If the target content is a text document, the video stream is a video generated in the process of operating the text document by the first user.

In this embodiment, the process of obtaining the video stream corresponding to the target content may be pulling the video stream from a container where the target content is located. A mode for obtaining the video stream corresponding to the target content may be: if the target content is of a video type, directly pulling the video stream corresponding to the target content; and if the target content is of a text type, taking (i.e. recording), at a defined frame rate, a screenshot of an image where the target content is located, to obtain the video stream corresponding to the target content.

In this embodiment, when it is monitored that the first user triggers the operation for the target content, the video stream corresponding to the target content starts to be pulled. If a current scenario is a video chat scenario, a capturing operation of a camera of the client of the first user may be paused, i.e., the camera of the client of the first user may be temporarily turned off.

Specifically, the process of obtaining the video stream corresponding to the target content may be: displaying a screen casting entry corresponding to the target content; sending a screen casting request to the server through the screen casting entry; receiving screen casting feedback information returned by the server according to the screen casting request; and obtaining the video stream corresponding to the target content according to the screen casting feedback information.

The screen casting entry may be reflected through a screen casting button. Displaying the screen casting entry may be understood as adjusting a status of the screen casting button to be tappable. The screen casting feedback information may be information of allowing screen casting. In this embodiment, after the screen casting entry of the target content is displayed, the client of the first user generates the screen casting request based on a tapping operation performed by the first user on the screen casting entry, and sends the screen casting request to the server for live streaming. The server returns the screen casting feedback information to the client of the first user based on the screen casting request. When the client of the first user receives the screen casting feedback information returned by the server, the client notifies the container where the target content is located to output the video stream. When the container where the target content is located receives the notification, the container outputs the video stream at the defined frame rate.

The screen casting request carries a first user identification. Optionally, the process of receiving the screen casting feedback information returned by the server may be: receiving screen casting allowed information. Specifically for example, when the first user identification belongs to a predefined first user identification, the server returns the screen casting allowed information for screen casting.

Optionally, after the screen casting request is sent to the server through the screen casting entry, the method further includes the following steps: Layout information returned by the server according to the screen casting request is received; and an interface layout of the client of the current first user according to the layout information,
wherein the layout information may be understood as a layout that supports screen casting. The layout information includes a layout mode of a first user seat and/or a guest seat. In this embodiment, the layout mode that supports screen casting is configured in advance. When the server receives the screen casting request from the client of the first user, the server returns the layout information that supports screen casting to the client of the first user, so that the client of the first user updates the interface layout based on the received layout information, to ensure smooth screen casting of the target content later.
S130, the video stream is casted to a first user seat for display, and the video stream is pushed to a client of a second user,
wherein the second user may be understood as another user in the current live streaming room other than the first user. The second user may be a live streamer, a guest, or a viewer.

In this embodiment, after the video stream of the target content is obtained, the video stream is casted to the first user seat for display, i.e., a video source of the first user seat is switched from the image captured by the camera to the video stream of the target content.

Optionally, after the screen casting request sent to the server through the screen casting entry, the method further includes the following steps: Audio and video parameters returned by the server according to the screen casting request are received. Correspondingly, a mode for pushing the video stream to the client of the second user may be: pushing the video stream to the client of the second user based on the audio and video parameters.

The audio and video parameters include information such as a resolution and a bit rate, and the video stream is pushed to the client of the second user according to the audio and video parameters such as the resolution and the bit rate, so that the client of the second user displays the video stream in the first user seat.

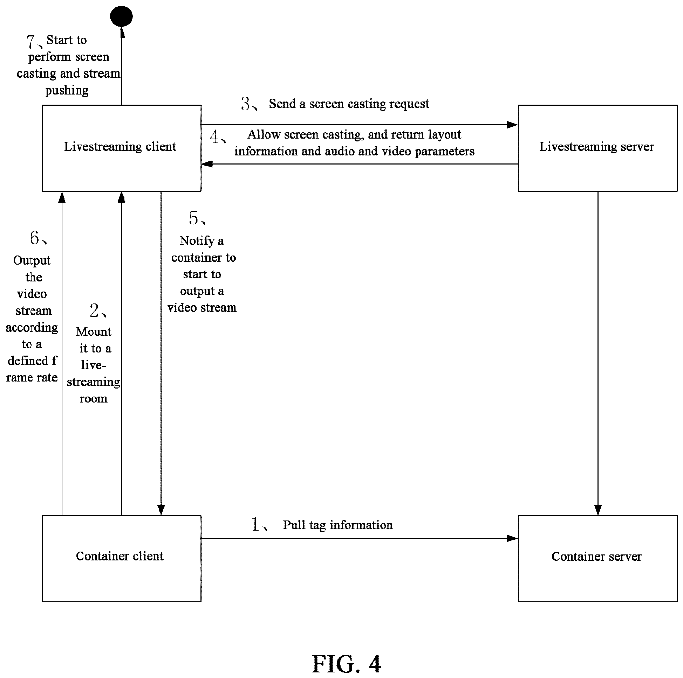

In an application scenario, screen casting for video chat needs to be completed by cooperation of a live streaming client, a container client, a live streaming server, and a container server. The live streaming client is used by the first user for live streaming and interacts with a guest through video chat. The live streaming server is used for live streaming related services and sending and managing screen casting parameters. The container client is responsible for starting open containers (games and mini programs) and packaging a screen casting image output capability. The container server is configured to manage meta-information (meta) of the open containers. FIG. 4 is a schematic diagram of a screen casting method in this embodiment. As shown in FIG. 4, the screen casting process includes the following steps:
1. When it is monitored that a first user triggers target content, a container client pulls tag information from a container server.
2. The container client is mounted in a live streaming client.
3. The live streaming client sends a screen casting request to a live streaming server based on the triggering operation of the first user.
4. The live streaming server returns layout information and audio and video parameters to the live streaming client to allow screen casting.
5. The live streaming client notifies a container client to output a video stream.
6. The container client inputs the video stream to the live streaming client at a defined frame rate.
7. Screen casting and stream pushing are started.

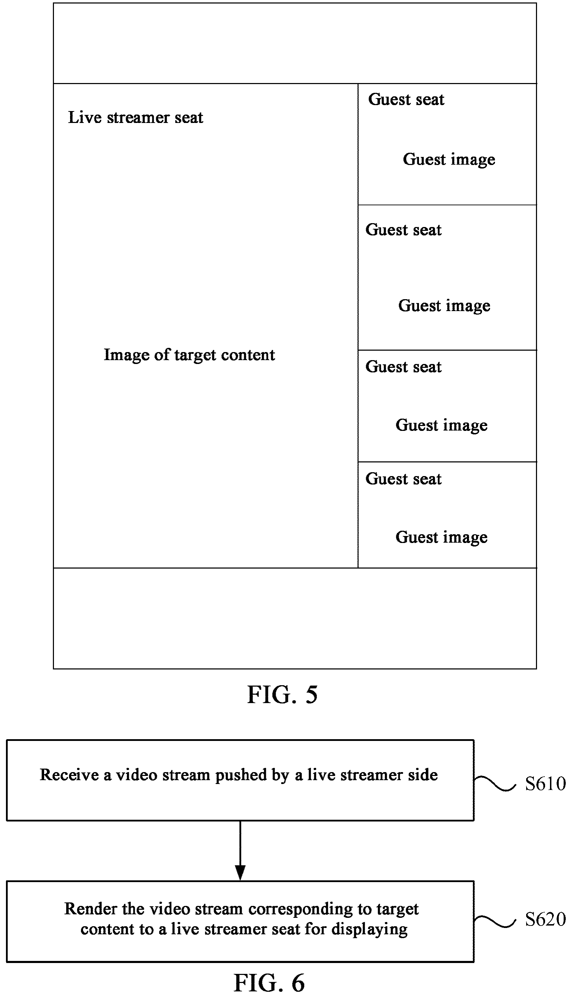

For example, FIG. 5 is a sample graph of casting target content to a first user seat in this embodiment. As shown in FIG. 5, a first user being a live streamer is taken as an example. The target content is casted and displayed to a live streamer seat. An image of the target content does not occlude other areas in a live streaming interface, and facilitates interaction between users in a live streaming room. In addition, pushing the video stream of the target content to a client of a second user enables viewers to directly know live streaming content, thus improving the interactivity of live streaming.

According to the technical solution of this embodiment, target content is displayed based on an operation triggered by a first user on a live streaming interface; a video stream corresponding to the target content is obtained; and the video stream is casted to a first user seat for display, and the video stream is pushed to a client of a second user. According to the screen casting method provided in the embodiments of the present disclosure, the video stream of the target content triggered by the first user is casted to the first user seat for display, which can improve the diversity of interactions between users in a live streaming process and enhance a user experience.

FIG. 6 is a flowchart of a screen casting method according to an embodiment of the present disclosure. The method may be performed by a screen casting apparatus arranged at a viewer side. The apparatus may be implemented in the form of software and/or hardware. Optionally, the apparatus is implemented through an electronic device. The electronic device may be a mobile terminal, a PC end, a server, or the like. As shown in FIG. 6, the method includes the following steps:
S610, a video stream pushed by a client of a first user is received,
wherein the video stream includes a video stream corresponding to target content. The video stream corresponding to the target content is obtained by the first user in a process of triggering the target content on the client of the first user. A specific obtaining mode is described in the above embodiment and will not be elaborated here. In this embodiment, the first user first sends the video stream to a stream pushing server, and then the stream pushing server forwards the video stream to a client of a second user.
S620, the video stream corresponding to the target content is rendered to a first user seat for display.

In this embodiment, the client of the second user may receive layout information sent by the client of the first user while receiving the video stream. The client of the second user first updates a layout of a live streaming interface according to the layout information, and then renders the video stream corresponding to the target content to the first user seat for display, so that a viewer can watch the target content triggered by the first user.

According to the technical solution of this embodiment, a video stream pushed by a client of a first user is received, wherein the video stream includes a video stream corresponding to target content; and the video stream corresponding to the target content is rendered to a first user seat for display, so that a viewer can directly know live streaming content, and the interactivity of live streaming is improved.

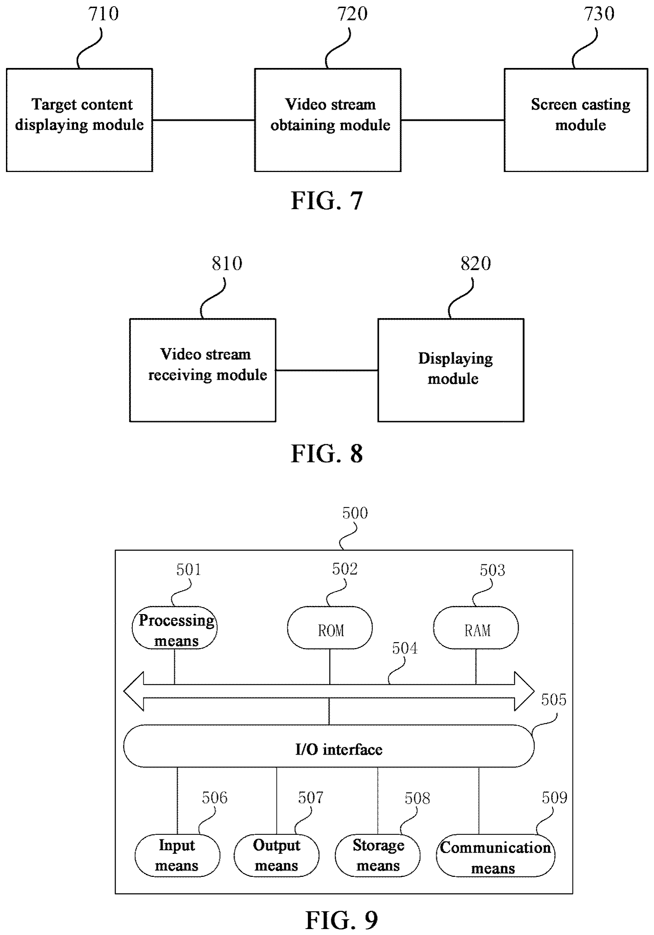

FIG. 7 is a schematic structural diagram of a screen casting apparatus according to an embodiment of the present disclosure. As shown in FIG. 7, the apparatus includes:
a target content displaying module 710, configured to display target content based on an operation triggered by a first user on a live streaming interface;
a video stream obtaining module 720, configured to obtain a video stream corresponding to the target content; and
a screen casting module 730, configured to cast the video stream to a first user seat for display, and pushing the video stream to a client of a second user.

Optionally, the target content displaying module 710 is further configured to:
request tag information of the target content from a server based on a first operation triggered by the first user on the live streaming interface;
receive the tag information sent by the server, and display the tag information on a panel corresponding to the target content; and
display the target content based on a second operation triggered by the first user on the tag information.

Optionally, the video stream obtaining module 720 is further configured to:
display a screen casting entry corresponding to the target content;
send a screen casting request to the server through the screen casting entry;
receive screen casting feedback information returned by the server according to the screen casting request; and
obtain and pull the video stream corresponding to the target content according to the screen casting feedback information.

Optionally, the apparatus further includes: a layout information receiving module, configured to:
receive layout information returned by the server according to the screen casting request.

Optionally, the apparatus further includes: a layout update module, configured to:
update an interface layout of a client of the first user according to the layout information, wherein the layout information includes a layout mode of a first user seat and/or a guest seat.

Optionally, the apparatus further includes: an audio and video parameter receiving module, configured to:
receive audio and video parameters returned by the server according to the screen casting request.

Optionally, the apparatus further includes: a stream pushing module, configured to:
push the video stream to the client of the second user based on the audio and video parameters.

FIG. 8 is a schematic structural diagram of a screen casting apparatus according to an embodiment of the present disclosure. As shown in FIG. 8, the apparatus includes:
a video stream receiving module 810, configured to receive a video stream pushed by a client of a first user, wherein the video stream includes a video stream corresponding to target content; and
a displaying module 820, configured to render the video stream corresponding to the target content to a first user seat for display.

The screen casting apparatus according to this embodiment of the present disclosure can perform the screen casting method according to any embodiment of the present disclosure, and includes corresponding functional modules for implementing the method and corresponding beneficial effects.

It is worth noting that the various units and modules included in the above apparatus are only divided according to a functional logic, but are not limited to the above division, as long as the corresponding functions can be achieved. In addition, the specific names of the various functional units are only for the purpose of distinguishing and are not used to limit the protection scope of the embodiments of the present disclosure.

FIG. 9 is a schematic structural diagram of an electronic device according to the embodiments of the present disclosure. Reference is now made to FIG. 9 below, which illustrates a schematic structural diagram of an electronic device (i.e., a terminal device or a server in FIG. 9) 500 suitable for implementing an embodiment of the present disclosure. The terminal device in the embodiments of the present disclosure may include, but is not limited to, a mobile phone, a laptop, a digital broadcast receiver, a Personal Digital Assistant (PDA), a Portable Android Device (PAD), a Portable Media Player (PMP), a mobile terminal such as a vehicle-mounted terminal (for example, a vehicle-mounted navigation terminal), and a fixed terminal such as digital television (TV) and a desktop computer. The electronic device shown in FIG. 9 is only an example and should not impose any limitations on the functionality and scope of use of the embodiments of the present disclosure.

As shown in FIG. 9, the electronic device 500 may include a processing means (e.g. a central processing unit and graphics processor) 501 that can perform various appropriate actions and processing according to programs stored in a read-only memory (ROM) 502 or loaded from a storage means 508 to a random access memory (RAM) 503. The RAM 503 further stores various programs and data required for the operation of the electronic device 500. The processing means 501, the ROM 502, and the RAM 503 are connected to each other through a bus 504. An Input/Output (I/O) interface 505 is also connected to the bus 504.

Usually, following apparatuses can be connected to the I/ O interface 505: an input means 506 including a touch screen, a touchpad, a keyboard, a mouse, a camera, a microphone, an accelerometer, a gyroscope, and the like; an output means 507 including a Liquid Crystal Display (LCD), a speaker, a vibrator, and the like; a storage means 508 including a magnetic tape, a hard disk drive, and the like; and a communication means 509. The communication means 509 can allow the electronic device 500 to wirelessly or wiredly communicate with other devices to exchange data. Although FIG. 9 shows the electronic device 500 with various apparatuses, it should be understood that the electronic device 500 is not required to implement or have all the apparatuses shown, and can alternatively implement or have more or fewer apparatuses.

Particularly, according to the embodiments of the present disclosure, the process described in the reference flowchart above can be implemented as a computer software program. For example, the embodiments of the present disclosure include a computer program product, including a computer program carried on a non-transitory computer-readable medium, and the computer program includes program codes used for performing the methods shown in the flowcharts. In such an embodiment, the computer program may be downloaded and installed from a network through the communication means 509, or installed from the memory 508, or installed from the ROM 502. When the computer program is executed by the processing means 501, the above-mentioned functions defined in the methods of the embodiments of the present disclosure are executed.

Names of messages or information interacted between a plurality of apparatuses in the implementations of the present disclosure are only for illustrative purposes and are not intended to limit the scopes of these messages or information.

The electronic device according to this embodiment of the present disclosure and the screen casting method provided in the above embodiments belong to the same concept. Technical details not fully described in this embodiment can be found in the above embodiments, and this embodiment has the same effects as the above embodiments.

An embodiment of the present disclosure provides a computer storage medium, having a computer program stored therein. The program, when run by a processor, implements the screen casting method provided in the above embodiments.

It should be noted that the computer-readable medium mentioned in the present disclosure can be a computer-readable signal medium, a computer-readable storage medium, or any combination of the computer-readable signal medium and the computer-readable storage medium. The computer-readable storage medium can be, for example, but not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard disk drive, a RAM, a ROM, an Erasable Programmable Read Only Memory (EPROM) or flash memory, an optical fiber, a Compact Disc Read-Only Memory (CD-ROM), an optical storage device, a magnetic storage device, or any suitable combination of the above. In the present disclosure, the computer-readable storage medium may be any tangible medium that contains or stores a program, and the program can be used by or in combination with an instruction execution system, apparatus, or device. In the present disclosure, the computer-readable signal media may include data signals propagated in a baseband or as part of a carrier wave, which carries computer-readable program codes. The propagated data signals can be in various forms, including but not limited to: electromagnetic signals, optical signals, or any suitable combination of the above. The computer-readable signal medium may also be any computer-readable medium other than a computer-readable storage medium. The computer-readable signal medium can send, propagate, or transmit programs for use by or in combination with an instruction execution system, apparatus, or device. The program codes contained in the computer-readable medium can be transmitted using any suitable medium, including but are not limited to: a wire, an optical cable, a Radio Frequency (RF), and the like, or any suitable combination of the above.

In some implementations, clients and servers can communicate using any currently known or future developed network protocol such as a HyperText Transfer Protocol (HTTP), and can intercommunicate and be interconnected with digital data in any form or medium (for example, a communication network). Examples of the communication network include a Local Area Network (LAN), a Wide Area Network (WAN), an internet (such as an Internet), a point-to-point network (such as an ad hoc point-to-point network, and any currently known or future developed network.

The computer-readable medium may be included in the electronic device or exist alone and is not assembled into the electronic device.

The above computer-readable medium carries one or more programs. When the one or more programs are run by the electronic device, the electronic device is caused to:

The above computer-readable medium carries one or more programs. The one or more programs, when run by the electronic device, cause the electronic device to: display target content based on an operation triggered by a first user on a live streaming interface; obtain a video stream corresponding to the target content; and cast the video stream to a first user seat for display, and push the video stream to a client of a second user.

Or, the above computer-readable medium carries one or more programs. The one or more programs, when run by the electronic device, cause the electronic device to: receive a video stream pushed by a client of a first user, wherein the video stream includes a video stream corresponding to target content; and render the video stream corresponding to the target content to a first user seat for display,

Computer program codes for performing the operations of the present disclosure may be written in one or more programming languages or a combination thereof. The above programming languages include but are not limited to an object-oriented programming language such as Java, Smalltalk, and C++, and conventional procedural programming languages such as "C" language or similar programming languages. The program codes may be executed entirely on a user computer, partly on a user computer, as a stand-alone software package, partly on a user computer and partly on a remote computer, or entirely on a remote computer or a server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowcharts and block diagrams in the accompanying drawings illustrate possible system architectures, functions, and operations that may be implemented by a system, a method, and a computer program product according to various embodiments of the present disclosure. In this regard, each block in a flowchart or a block diagram may represent a module, a program, or a part of a code. The module, the program, or the part of the code includes one or more executable instructions used for implementing specified logic functions. In some implementations used as substitutes, functions annotated in blocks may alternatively occur in a sequence different from that annotated in an accompanying drawing. For example, actually two blocks shown in succession may be performed basically in parallel, and sometimes the two blocks may be performed in a reverse sequence. This is determined by a related function. It is also be noted that each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

The units described in the embodiments of the present disclosure can be implemented through software or hardware. The name of the unit does not constitute a limitation on the unit itself. For example, the first obtaining unit can also be described as "a unit that obtains at least two Internet protocol addresses".

The functions described herein above may be performed, at least in part, by one or a plurality of hardware logic components. For example, nonrestrictively, example hardware logic components that can be used include: a Field Programmable Gate Array (FPGA), an Application Specific Integrated Circuit (ASIC), Application Specific Standard Parts (ASSP), a System on Chip (SOC), a Complex Programmable Logic Device (CPLD), and the like.

In the context of the present disclosure, a machine-readable medium may be a tangible medium that may include or store a program for use by an instruction execution system, apparatus, or device or in connection with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable medium may include an electrical connection based on one or more wires, a portable computer disk, a hard disk drive, a RAM, a ROM, an EPROM or flash memory, an optical fiber, a CD-ROM, an optical storage device, a magnetic storage device, or any suitable combinations of the above contents.

According to one or more embodiments of the present disclosure, a screen casting method is provided, including:
displaying target content based on an operation triggered by a first user on a live streaming interface;
obtaining a video stream corresponding to the target content; and
casting the video stream to a first user seat for display, and pushing the video stream to a client of a second user.

Further, displaying the target content based on the operation triggered by the first user on the live streaming interface includes:
requesting tag information of the target content from a server based on a first operation triggered by the first user on the live streaming interface;
receiving the tag information sent by the server, and displaying the tag information on a panel corresponding to the target content; and
displaying the target content based on a second operation triggered by the first user on the tag information.

Further, obtaining the video stream corresponding to the target content includes:
displaying a screen casting entry corresponding to the target content;
sending a screen casting request to the server through the screen casting entry;
receiving screen casting feedback information returned by the server according to the screen casting request; and
obtaining and pulling the video stream corresponding to the target content according to the screen casting feedback information.

Further, after sending the screen casting request to the server through the screen casting entry, the method further includes:
receiving layout information returned by the server according to the screen casting request; and
updating an interface layout of a client of the first user according to the layout information, wherein the layout information includes a layout mode of a first user seat and/or a guest seat.

Further, after sending the screen casting request to the server through the screen casting entry, the method further includes:
receiving audio and video parameters returned by the server according to the screen casting request.

Correspondingly, pushing the video stream to the client of the second user includes:
pushing the video stream to the client of the second user based on the audio and video parameters.

An embodiment of the present disclosure further provides a screen casting method, including:

Recei5ving a video stream pushed by a client of a first user, wherein the video stream includes a video stream corresponding to target content; and
rendering the video stream corresponding to the target content to a first user seat for display.

The foregoing descriptions are merely preferred embodiments of the present disclosure and explanations of the applied technical principles. Those skilled in the art should understand that the scope of disclosure referred to in the present disclosure is not limited to the technical solutions formed by specific combinations of the aforementioned technical features, but also covers other technical solutions formed by any combinations of the aforementioned technical features or their equivalent features without departing from the concept of the above disclosure, for example, a technical solution formed by replacing the above features with (but not limited to) technical features with similar functions disclosed in the present disclosure.

In addition, although various operations are depicted in a specific order, this should not be understood as requiring these operations to be executed in the specific order shown or in a sequential order. In certain environments, multitasking and parallel processing may be advantageous. Similarly, although several specific implementation details are included in the above discussion, these should not be interpreted as limiting the scope of the present disclosure. Some features described in the context of individual embodiments can also be combined and implemented in a single embodiment. On the contrary, various features that are described in the context of the single embodiment may also be implemented in a plurality of embodiments separately or in any suitable sub-combinations.

Although the subject matter has been described in a language specific to structural features and/or method logical actions, it should be understood that the subject matter limited in the attached claims may not necessarily be limited to the specific features or actions described above. On the contrary, the specific features and actions described above are only exemplary forms for implementing the claims.

## Claims

1. A screen casting method, comprising:
displaying target content based on an operation triggered by a first user on a live streaming interface;
obtaining a video stream corresponding to the target content; and
casting the video stream to a first user seat for display, and pushing the video stream to a client of a second user.

2. The method of claim 1, wherein displaying the target content based on the operation triggered by the first user on the live streaming interface comprises:
requesting tag information of the target content from a server based on a first operation triggered by the first user on the live streaming interface;
receiving the tag information sent by the server, and displaying the tag information on a panel corresponding to the target content; and
displaying the target content based on a second operation triggered by the first user on the tag information.

3. The method of claim 1, wherein obtaining the video stream corresponding to the target content comprises:
displaying a screen casting entry corresponding to the target content;
sending a screen casting request to the server through the screen casting entry;
receiving screen casting feedback information returned by the server based on the screen casting request; and
obtaining the video stream corresponding to the target content based on the screen casting feedback information.

4. The method of claim 3, further comprising:
receiving layout information returned by the server based on the screen casting request; and
updating an interface layout of a client of the first user based on the layout information, wherein the layout information comprises a layout mode of a first user seat and/or a guest seat.

5. The method of claim 3, further comprising:
receiving audio and video parameters returned by the server based on the screen casting request,
wherein correspondingly, pushing the video stream to the client of the second user comprises:
pushing the video stream to the client of the second user based on the audio and video parameters.

6. A screen casting method, comprising:
receiving a video stream pushed by a client of a first user, wherein the video stream comprises a video stream corresponding to target content; and
rendering the video stream corresponding to the target content to a first user seat for display.

7. A screen casting apparatus, comprising:
a target content displaying module, configured to display target content based on an operation triggered by a first user on a live streaming interface;
a video stream obtaining module, configured to obtain a video stream corresponding to the target content; and
a screen casting module, configured to cast the video stream to a first user seat for display, and push the video stream to a client of a second user.

8. A screen casting apparatus, comprising:
a video stream receiving module, configured to receive a video stream pushed by a client of a first user, wherein the video stream comprises a video stream corresponding to target content; and
a displaying module, configured to render the video stream corresponding to the target content to a first user seat for display.

9. An electronic device, comprising:
one or more processors; and a storage, configured to store one or more programs,
wherein the one or more programs, when run by the one or more processors, cause the one or more processors to implement the screen casting method of any of claims 1 to 6.

10. A storage medium comprising computer-executable instructions, wherein the computer-executable instructions, when executed by a computer processor, are configured for performing the screen casting method of any of claims 1 to 6.
